# EUROPÄISCHE PATENTSCHRIFT

(11) **EP 2 932 363 B1**
(45) Veröffentlichungstag und Bekanntmachung des Hinweises auf die Patenterteilung: **15.08.2018**
(21) Anmeldenummer: 13802921.0
(22) Anmeldetag: 02.12.2013
(51) Int. Cl.: G06F 3/0481, G06F 3/0484

(54) **BEDIENVERFAHREN UND BEDIENVORRICHTUNG**
OPERATING METHOD AND OPERATING DEVICE
PROCÉDÉ DE COMMANDE ET DISPOSITIF DE COMMANDE

(30) Priorität: 11.12.2012 DE 102012024215
(43) Veröffentlichungstag der Anmeldung: 21.10.2015
(73) Patentinhaber: Volkswagen Aktiengesellschaft, 38440 Wolfsburg (DE)
(72) Erfinder: MISCHKE, Michael, 10829 Berlin (DE); JOACHIM, Manuel, 38110 Braunschweig (DE); WITTKÄMPER, Michael, 38102 Braunschweig (DE)
(86) Internationale Anmeldenummer: PCT/EP2013/075265
(87) Internationale Veröffentlichungsnummer: WO 2014/090625

(56) Entgegenhaltungen:
- DE-A1-102006 037 156
- US-A1- 2008 250 312
- US-A1- 2009 006 993
- A COCKBURN ET AL: "Human on-line response to visual and motor target expansion", ., 1. Januar 2006 (2006-01-01), XP055107268, ISSN: 9781-5688 ISBN: 978-1-56-881308-0
- Andy Cockburn ET AL: "Improving the Acquisition of Small Targets" In: "People and Computers XVII - Designing for Society", 1. Januar 2004 (2004-01-01), Springer London, London, XP055107270, ISBN: 978-1-44-713754-2 Seiten 181-196, DOI: 10.1007/978-1-4471-3754-2_11, das ganze Dokument

## Beschreibung

Die vorliegende Erfindung betrifft ein Bedienverfahren und eine Bedienvorrichtung, die geeignet sind, eine Anzeige mit einer Vielzahl von graphischen Objekten zu steuern. Hierfür wird bei dem Bedienverfahren auf einer Anzeigefläche eine Vielzahl von graphischen Objekten bei verschiedenen Anzeigepositionen angezeigt. Durch eine Betätigung eines Bedienelements, welches abgesetzt von der Anzeigefläche angeordnet ist, werden die Anzeigepositionen der graphischen Objekte gemeinsam verschoben. Zumindest ein graphisches Objekt wird in Abhängigkeit von seiner Anzeigeposition relativ zu einem ortsfesten Markierbereich der Anzeigefläche markiert dargstellt. Die erfindungsgemäße Bedienvorrichtung umfasst eine Anzeigefläche auf der eine Vielzahl von graphischen Objekten bei verschiedenen Anzeigepositionen anzeigbar ist. Ferner umfasst die Bedienvorrichtung ein Bedienelement, das abgesetzt von der Anzeigefläche angeordnet ist, und eine Steuervorrichtung, die mit der Anzeigefläche und dem Bedienelement gekoppelt ist, wobei durch eine Betätigung des Bedienelements, die Anzeigepositionen der graphischen Objekte gemeinsam verschiebbar sind, und wobei zumindest ein graphisches Objekt in Abhängigkeit von seiner Anzeigeposition relativ zu einem ortsfesten Markierbereich der Anzeigefläche markiert darstellbar ist.

Bei bekanten Bedienverfahren, bei denen von der Anzeigefläche abgesetzte Bedienelemente eingesetzt werden, wird auf der Anzeigefläche eine Markierung, die auch als Cursor bezeichnet wird, verwendet, welche Bedienungen über das Bedienelement visualisiert. Die Position dieser Markierung kann auf der Anzeigefläche verändert werden. Ferner ist es bekannt, den Anzeigeinhalt relativ zu einer ortsfesten Markierung zu verschieben.

Unter dem Begriff "Bubblecursor" ist ein Bedienverfahren bekannt, bei dem eine Anwahl von graphischen Objekten außerhalb eines Bildschirmausschnittes dadurch erfolgt, dass der Cursor am Rand des aktuellen Ausschnitts verharrt, bis der Anzeigeinhalt unter dem Cursor hindurchwandert, das heißt es verändert sich der angezeigte Bildausschnitt. Bei diesem Bedienverfahren ist es somit erforderlich, dass der Nutzer ständig visuell kontrolliert, ob der Cursor schon das richtige Objekt markiert und der Anzeigeinhalt richtig verschoben wurde. Dies ist insbesondere bei einem Einsatz in einem Kraftfahrzeug nachteilig, da es bei einem solchen Einsatz wünschenswert ist, dass der Nutzer für die Markierung eines graphischen Objekts den Blick nur kurzzeitig auf die Anzeigefläche richten muss.

Des Weiteren ist ein Bedienverfahren für die Anzeige eines Navigationssystems bekannt, bei dem als Markierung ein Fadenkreuz angezeigt wird und mittels des Bedienelements die angezeigte geographische Karte relativ zu diesem Fadenkreuz verschoben wird. Hierbei ergibt sich das Problem, dass der Nutzer erst erkennen muss, was durch die Betätigung des Bedienelements bewegt wird: das Fadenkreuz oder die geographische Karte.

Aus der US 2009/0172532 A1 ist ein Bedienverfahren bekannt, welches beispielsweise bei einem Medienabspielgerät eingesetzt wird. Auf einer Anzeigefläche werden verschiedene graphische Objekte angezeigt, welche verschiedene Medien repräsentieren. Der Nutzer kann durch bestimmte Bediengesten die Anzeige dieser graphischen Objekte steuern.

Die WO 2010/018126 A1 beschreibt eine Menüführung auf dem Bildschirm eines Mobiltelefons, bei welcher ein Satz von Icons auf einem dreidimensional dargestellten nach außen gewölbten Teil einer virtuellen Kugel angeordnet ist. Die Anzeigefläche ist in diesem Fall als Touchscreen ausgebildet. Durch Berührgesten kann die dargestellte Kugel in Drehung versetzt werden, um andere Icons zur Anzeige zu bringen.

Aus der DE 10 2010 042 326 A1 ist eine Anzeigesteuervorrichtung für eine Fernsteuerungsvorrichtung bekannt. Bei dieser Vorrichtung wird ein Cursor als Abbildung angezeigt, die eine Außenkante eines gewählten Symbols oder die eine Farbe oder Helligkeit eines gewählten Symbols hervorhebt.

Aus der DE 10 2009 037 658 A1 ist eine Anzeigeeinrichtung bekannt, welche graphische Objekte und eine Cursordarstellung anzeigt. Den Objekten sind mehrere Funktionen zugeordnet. Mittels einer Bedieneinrichtung kann der Abstand der Cursordarstellung zu einem graphischen Objekt verändert werden. Wenn ein Abstand der Cursordarstellung zu einem Objekt unter einen vorbestimmten Wert verringert wird, wird in diesem Fall das Objekt gewählt. Über einen Sprachbefehl kann dann eine der dem gewählten Objekt zugeordnete Funktion ausgewählt werden.

Schließlich sind aus der DE 2009 019 818 A1 ein Bedien- und Anzeigesystem für ein Fahrzeug mit Multifunktionsbedieneinheiten bekannt und aus der DE 10 2009 038 044 A1 ein Verfahren zum Betreiben einer Bedieneinrichtung eines Fahrzeugs bekannt, bei dem ein sogenannter Touchpad verwendet wird. Ferner ist aus der DE 10 2006 037 156 A1 ein Bedien- und Anzeigesystem für ein Fahrzeug bekannt, bei dem der Nutzer mittels eines berührungsempfindlichen Bildschirms oder einer Gesteneingabe Listeneinträge durch einen Fokusbereich scrollen und auswählen kann.

Der vorliegenden Erfindung liegt die Aufgabe zugrunde, ein Bedienverfahren und eine Bedienvorrichtung der eingangs genannte Art bereitzustellen, mit denen möglichst einfach und intuitiv graphische Objekte markiert werden können.

Erfindungsgemäß wird diese Aufgabe durch ein Bedienverfahren mit den Merkmalen des Anspruchs 1 und eine Bedienvorrichtung mit den Merkmalen des Anspruchs 10 gelöst. Vorteilhafte Ausgestaltungen und Weiterbildungen ergeben sich aus den abhängigen Ansprüchen.

Wenn bei dem erfindungsgemäßen Verfahren durch eine Betätigung des Bedienelements die Anzeigepositionen der graphischen Objekte gemeinsam verschoben werden, wird geprüft, ob ein Wechsel des markierten Objekts initiiert werden soll, wobei die Prüfung in Abhängigkeit von den Anzeigepositionen der graphischen Objekte relativ zu dem ortsfesten Markierbereich erfolgt. Wenn diese Prüfung ergeben hat, dass ein Wechsel des markierten Objekts initiiert werden soll, wird ein strahlenförmiges Anzeigeelement angezeigt, welches eine Anzeigeposition innerhalb des ortsfesten Markierbereichs mit dem zu markierenden Objekt verbindet, und die graphischen Objekte werden dann automatisch gemeinsam so verschoben, dass das zu markierende Objekt im Markierbereich der Anzeigefläche dargestellt wird.

Bei dem erfindungsgemäßen Verfahren wird somit der Anzeigeinhalt verschoben. Wenn der Anzeigeinhalt einen Ausschnitt einer größeren virtuellen Fläche darstellt, werden bei dieser Verschiebung gegebenenfalls graphische Objekte verschwinden und neue graphische Objekte auftauchen. Beim gemeinsamen Verschieben der graphischen Objekte bleibt dabei insbesondere die relative geometrische Anordnung dieser Objekte zueinander erhalten.

Ferner ist bei dem erfindungsgemäßen Verfahren zwar ein Markierbereich definiert. Es wird jedoch kein Cursor angezeigt, welcher durch eine Betätigung des Bedienelements verschoben werden kann. Der Nutzer kann daher einfach und intuitiv erfassen, welche Elemente der Anzeige bei einer Betätigung des Bedienelements verschoben werden. Auf diese Weise erkennt der Nutzer intuitiv, dass er zur Markierung eines Objekts die graphischen Objekte mittels der Betätigung des Bedienelements gemeinsam so verschieben muss, dass sich das zu markierende Objekt dem Markierbereich annähert. Der Markierbereich kann sich dabei insbesondere in der Mitte der Anzeigefläche befinden. Auf diese Weise wird das ursprünglich markierte Objekt von dem Markierbereich weg bewegt. Wenn sich ein anderes graphisches Objekt näher an dem Markierbereich befindet als das bisher markierte Objekt, erscheint das strahlenförmige Anzeigeelement. Dieses strahlenförmige Anzeigeelement symbolisiert einen Laserstrahl, welcher aus dem Markierbereich heraus auf das graphische Objekt gerichtet ist, welches sich derzeit am nächsten an dem Markierbereich befindet. Auf diese Weise kann der Nutzer intuitiv erfassen, welches graphische Objekt bei dieser Lage der Anzeigeobjekte als nächstes markiert wird. Wenn der Nutzer dann nicht ein anderes graphisches Objekt in die Nähe des Markierbereichs bewegt, werden die graphischen Objekte automatisch gemeinsam so verschoben, dass das graphische Objekt, auf welches das strahlenförmige Anzeigeelement gerichtet war, im Markierbereich dargestellt wird und entsprechend markiert wird. Unter einer automatischen Verschiebung der Objekte wird dabei verstanden, dass es nicht erforderlich ist, dass der Nutzer durch die Betätigung des Bedienelements das zu markierende Anzeigeelement exakt zum Markierbereich bewegt. Nachdem die Verbindung zu dem zu markierenden Objekt über das strahlenförmige Anzeigeelement hergestellt worden ist, wird es automatisch in den Markierbereich verschoben und markiert.

Dem Nutzer wird somit eine Rückmeldung dafür gegeben, was seine Betätigung über das Bedienelement verursacht und ein graphisches Objekt in der Nähe des Markierbereichs wird, bildlich ausgedrückt, von dem Markierbereich eingefangen. Außerdem kann der Nutzer durch die Betätigung des Bedienelements Objekte in den von der Anzeigefläche angezeigten Bildausschnitt bringen.

Gemäß einer Ausgestaltung des erfindungsgemäßen Bedienverfahrens wird bei der Prüfung, ob ein Wechsel des markierten Objekts initiiert werden soll, geprüft, ob die Anzeigeposition eines anderen graphischen Objekts näher an dem ortsfesten Markierbereich ist als die Anzeigeposition des gegenwärtig markierten graphischen Objekts. Eine solche Auswahl eines neuen markierten Objekts ist für den Nutzer besonders intuitiv nachvollziehbar. Es wird immer das graphische Objekt automatisch markiert, welches dem Markierbereich am nächsten ist.

Gemäß einer weiteren Ausgestaltung des erfindungsgemäßen Verfahrens wird zumindest ein graphisches Haftelement angezeigt, welches das markierte Objekt berührt, wenn es im Markierbereich angezeigt wird. Insbesondere sind mehrere graphische Haftelemente an den Enden von Linien angeordnet, deren Verlängerungen sich in dem markierten graphischen Objekt kreuzen. Durch die Linien wird zum einen die Position des Markierbereichs visualisiert. Die Haftelemente visualisieren für den Betrachter auf intuitive Weise, dass das Objekt, welches die Haftelemente berühren, markiert ist. Die Haftelemente symbolisieren dabei einen Klebstoff, welcher das markierte Objekt im Markierbereich hält.

Gemäß einer weiteren Ausgestaltung des erfindungsgemäßen Verfahrens wird eine Vignette eingeblendet, wenn ein Nutzer das Bedienelement berührt. Durch die Vignette werden von dem markierten Objekt entfernte Bereiche der Anzeigefläche abgedunkelt dargestellt. Durch diese Art der Darstellung wird ein aus der Fotografie bekannter visueller Effekt genutzt, um die Aufmerksamkeit des Nutzers auf das markierte Objekt zu lenken, wenn dieser das Bedienelement berührt, um einen Betätigungsvorgang zu beginnen.

Gemäß einer weiteren Ausgestaltung des erfindungsgemäßen Bedienverfahrens wird eine Korona oder ein Lichtrahmen um das markierte Objekt oder das zu markierende Objekt angezeigt. Unter einer Korona wird hier ein kranzartiges schwaches Leuchten um das graphische Objekt herum verstanden. Auf diese Weise kann der Nutzer schnell und intuitiv erfassen, welches Objekt markiert ist oder welches Objekt markiert wird.

Gemäß einer weiteren Ausgestaltung des erfindungsgemäßen Bedienverfahrens wird das markierte Objekt am größten angezeigt und benachbarte graphische Objekte werden kleiner angezeigt, wobei die Größe der benachbarten graphischen Objekte mit zunehmendem Abstand von dem markierten Objekt kleiner wird. Gleichzeitig können die Objekte auch so verzerrt dargestellt werden, wie es sich bei einer Betrachtung durch ein sogenanntes Fisheye-Objektiv ergeben würde. Der Mittelpunkt bei dieser Fisheye-Darstellung ist in diesem Fall der Mittelpunkt des markierten graphischen Objekts. Auch auf diese Weise kann für den Betrachter leicht erfassbar visualisiert werden, welches Objekt markiert ist.

Die erfindungsgemäße Bedienvorrichtung ist dadurch gekennzeichnet, dass, wenn durch eine Betätigung des Bedienelements die Anzeigepositionen der graphischen Objekte gemeinsam verschoben werden, mittels der Steuervorrichtung prüfbar ist, ob ein Wechsel des markierten Objekts initiiert werden soll, wobei die Prüfung in Abhängigkeit von den Anzeigepositionen der graphischen Objekte relativ zu dem ortsfesten Markierbereich erfolgt. Wenn die Prüfung ergeben hat, dass ein Wechsel des markierten Objekts initiiert werden soll, ist mittels der Steuervorrichtung die Anzeigefläche so ansteuerbar, dass ein strahlenförmiges Anzeigeelement angezeigt wird, welches eine Anzeigeposition innerhalb des ortsfesten Markierbereichs mit dem zu markierenden Objekt verbindet, und die graphischen Objekte dann automatisch gemeinsam so verschoben werden, dass das zu markierende Objekt im Markierbereich der Anzeigefläche dargestellt wird.

Die erfindungsgemäße Bedienvorrichtung ist insbesondere ausgebildet, das vorstehend genannte Bedienverfahren auszuführen. Es weist somit auch dieselben Vorteile auf.

Das Bedienelement der erfindungsgemäßen Bedienvorrichtung umfasst insbesondere eine berührungsempfindliche Oberfläche. Es wird somit ein sogenannter Touchpad bereitgestellt. Die erfindungsgemäße Bedienvorrichtung ist insbesondere in einem Kraftfahrzeug angeordnet. In diesem Fall befindet sich die berührungsempfindliche Oberfläche des Bedienelements im Greifbereich des Fahrers des Fahrzeugs, wenn er auf dem Fahrersitz sitzt. Die Anzeigefläche befindet sich hingegen im Hauptsichtfeld des Fahrers. Sie kann beispielsweise in der Mittelkonsole oder im sogenannten Kombiinstrument des Fahrzeugs angeordnet sein. Ferner kann die Anzeigefläche auch von einem Head-Up-Display umfasst sein, so dass die Anzeige in die Windschutzscheibe des Kraftfahrzeugs projiziert wird.

Gleichermaßen kann die erfindungsgemäße Bedienvorrichtung jedoch auch bei Anzeigen im Industriebereich oder bei Computeranwendungen eingesetzt werden.

Die Erfindung wird nun anhand eines Ausführungsbeispiels mit Bezug zu den Zeichnungen erläutert.

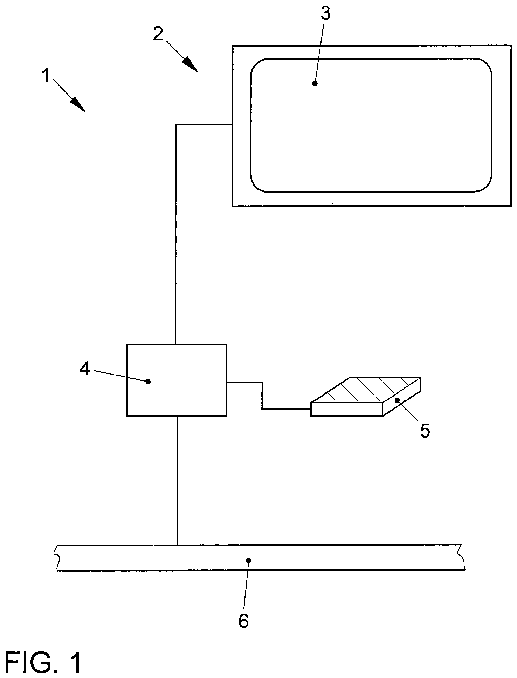

- Figur 1: zeigt schematisch den Aufbau eines Ausführungsbeispiels der erfindungsgemäßen Bedienvorrichtung,
- Figuren 2 - 4: zeigen Anzeigen auf der Anzeigefläche, die von einem Ausführungsbeispiel des erfindungsgemäßen Bedienverfahrens erzeugt werden,
- Figuren 5 und 6: zeigen alternative Möglichkeiten zur Darstellung der Markierung eines graphischen Objekts anhand eines Beispiels, und
- Figur 7: zeigt die Anzeige eines weiteren Beispiels.
Die Bedienvorrichtung 1 umfasst eine Anzeigevorrichtung 2 mit einer Anzeigefläche 3. Die Anzeigefläche 3 kann von einem Display, insbesondere einem Flüssigkristalldisplay, beliebiger Bauart bereitgestellt werden.

Die Bedienvorrichtung 1 umfasst des Weiteren eine Steuervorrichtung 4, die mit der Anzeigevorrichtung 2 verbunden ist. Mittels der Steuervorrichtung 4 können Graphikdaten zur Informationsdarstellung auf der Anzeigefläche 3 erzeugt werden. Des Weiteren ist ein Bedienelement 5 mit der Steuervorrichtung 4 verbunden, welches eine berührungsempfindliche Oberfläche umfasst. Das Bedienelement 5 ist abgesetzt, das heißt entfernt von der Anzeigefläche 3 angeordnet.

Schließlich ist die Steuervorrichtung 4 mit einem Datenbus 6 verbunden, über welchen Daten von Funktionseinrichtungen an die Steuervorrichtung 4 übertragen werden können, deren Bedienung durch den Anzeige auf der Anzeigefläche 3 unterstützt werden soll. Ferner können über den Datenbus Steuerdaten von der Steuervorrichtung 4 an die entsprechenden Funktionseinrichtungen übertragen werden.

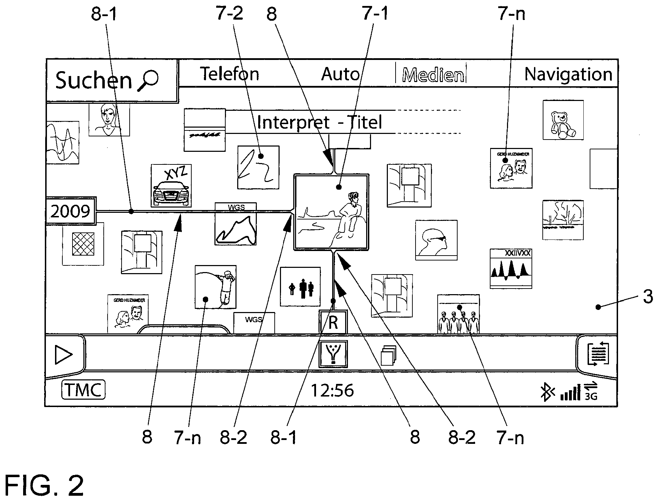

Mit Bezug zu den Figuren 2 bis 4 wird im Folgenden ein Ausführungsbeispiel des erfindungsgemäßen Verfahrens erläutert, welches durch die Bedienvorrichtung 1 ausgeführt werden kann:
Für die Anzeige auf der Anzeigefläche 3 ist eine virtuelle Fläche definiert, auf welcher eine Vielzahl von graphischen Objekten angeordnet ist, die allgemein mit 7-n bezeichnet werden. Auf der Anzeigefläche 3 wird ein Ausschnitt dieser virtuellen Fläche mit einer Teilmenge der graphischen Objekte 7-n angezeigt.

In der Mitte der Anzeigefläche 3 ist ein Markierbereich definiert. Das bei dem Markierbereich befindliche graphische Objekt 7-1 ist markiert. Zu einem markierten graphischen Objekt 7-1 können zugehörige weitere Funktionen aufgerufen werden. Im hier erläuterten Beispiel ist dem graphischen Objekt 7-1 eine Musikdatei zugeordnet. Durch einen bestimmten Bedienvorgang kann diese Musikdatei abgespielt werden.

Um zu visualisieren, dass das graphische Objekt 7-1 markiert ist, werden graphische Anzeigeelemente 8 dargestellt. Sie umfassen drei Linien 8-1, deren Verlängerungen sich in der Mitte des markierten graphischen Objekts 7-1 und in der Mitte des Markierbereichs kreuzen. An den Enden der Linien 8-1 sind graphische Haftelemente 8-2 dargestellt, welche das graphische Element 7-1 berühren und die ein Haften des graphischen Elements 7-1 im Markierbereich symbolisieren.

Wenn der Nutzer nun ein anderes graphisches Objekt 7-n, beispielsweise das graphische Objekt 7-2, markieren will, um beispielsweise das diesem graphischen Objekt 7-2 zugeordnete Musikstück abzuspielen, berührt der Nutzer die berührungsempfindliche Oberfläche des Bedienelements 5. Wenn er diese berührungsempfindliche Oberfläche berührt hat, wird eine Vignette eingeblendet, durch welche von dem derzeit markierten Objekt 7-1 entfernte Bereiche der Anzeigefläche 3 abgedunkelt dargestellt werden. Für den Bedienvorgang wird das derzeit markierte Objekt 7-1 hierdurch nochmals hervorgehoben.

Wenn der Nutzer nun beispielsweise seine Fingerspitze auf der berührungsempfindlichen Oberfläche des Bedienelements 5 bewegt, werden die graphischen Objekte 7-n entsprechend der Bewegung der Fingerspitze auf der berührungsempfindliche Oberfläche gemeinsam verschoben. In dem hier beschriebenen Beispiel bewegt der Nutzer beispielsweise seine Fingerspitze auf der berührungsempfindlichen Oberfläche nach rechts. Während dieser Bewegung wird mittels der Steuervorrichtung 4 geprüft, welches der graphischen Objekte 7-1 dem Markierbereich, das heißt im vorliegenden Fall dem Mittelpunkt der Anzeigefläche 3, am nächsten angeordnet ist. Wenn nicht mehr das graphische Objekt 7-1, welches derzeit markiert ist, dem Markierbereich am nächsten ist, sondern ein anderes graphisches Objekt 7-n, initiiert die Steuervorrichtung 4 einen Wechsel des markierten Objekts 7-n.

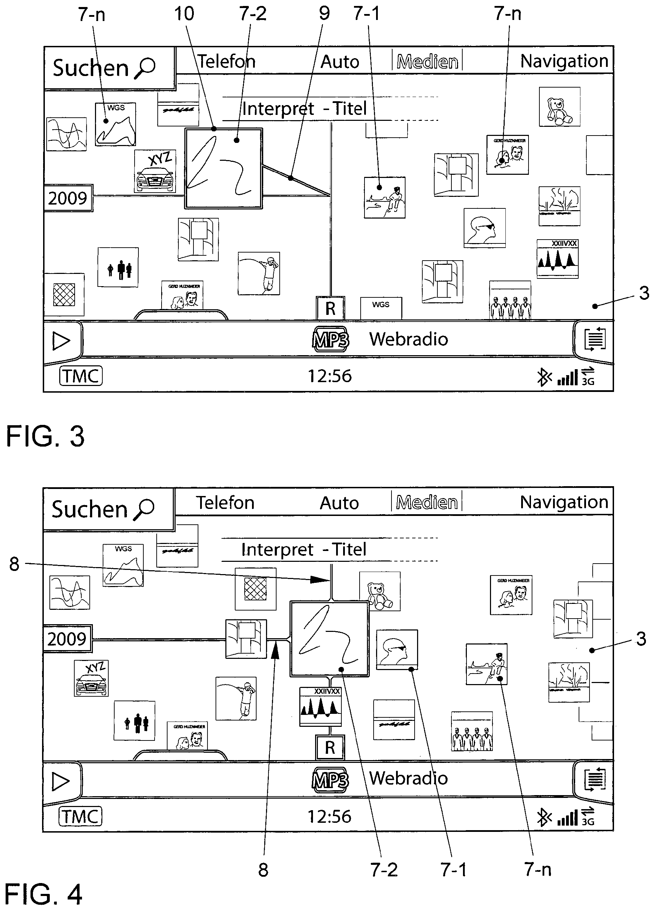

In Fig. 3 ist der Fall gezeigt, dass sich das graphische Objekt 7-2 näher an dem Markierbereich befindet, als das bisher markierte graphische Objekt 7-1. Das graphische Objekt 7-2 wird daraufhin mittels der Steuervorrichtung 4 verändert dargestellt: Es wird zum einen vergrößert und rückt entsprechend etwas von dem Markierbereich weg, es wird eine Korona 10 um dieses graphische Objekt 7-2 dargestellt und das graphische Objekt 7-2 selbst wird heller dargestellt. Des Weiteren wird ein strahlenförmiges Anzeigeelement 9 angezeigt, welches eine Anzeigeposition innerhalb des ortsfesten Markierbereichs, im vorliegenden Fall den Mittelpunkt der Anzeigefläche 3, mit dem zu markierenden Objekt 7-2 verbindet.

Wenn der Nutzer nun keine Bewegung seiner Fingerspitze auf der berührungsempfindlichen Oberfläche des Bedienelements 5 ausführt, das heißt für ein bestimmtes Zeitintervall mit seiner Fingerspitze auf der berührungsempfindlichen Oberfläche ruht, wird das zu markierende graphische Objekt 7-2 automatisch, das heißt ohne Betätigung eines Bedienelements 5 durch den Nutzer, gemeinsam mit den anderen graphischen Objekten 7-n so verschoben, dass es im Markierbereich der Anzeigefläche 3 dargestellt wird. Dies ist in Figur 4 wiedergegeben.

Das nun markierte graphische Objekt 7-2 wird dort, wie es bereits mit Bezug zu Figur 2 beschrieben wurde, mit den Anzeigeelementen 8 dargestellt.

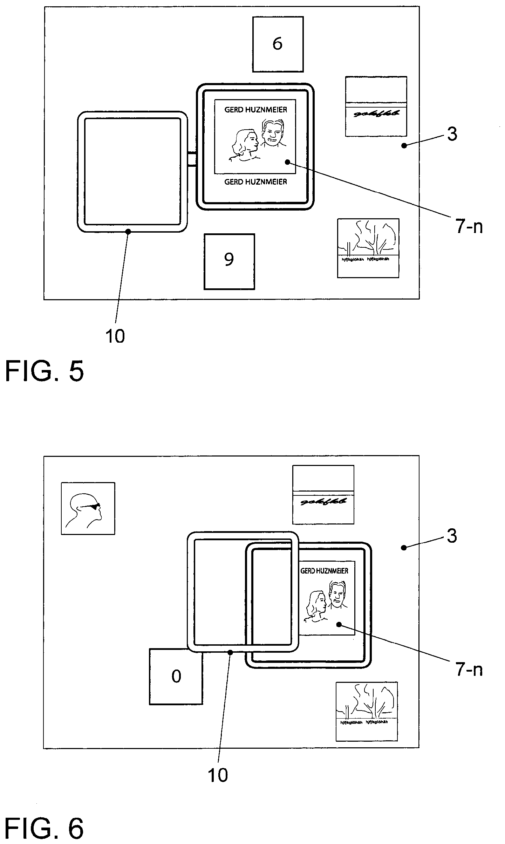

In den Figuren 5 bis 7 sind alternative Anzeigen des Bedienverfahrens wiedergegeben. Bei den Ausgestaltungen gemäß den Figuren 5 und 6 wird ein Lichtrahmen 10 um das markierte oder zu markierende Objekt 7-n angezeigt. Die übrigen nicht markierten Objekte 7-n werden in diesem Fall abgedunkelt dargestellt.

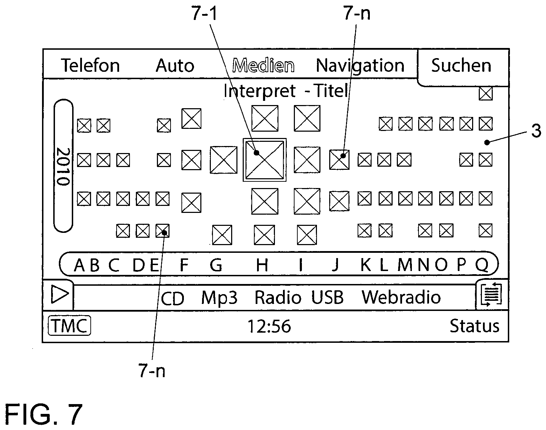

Bei der in Figur 7 gezeigten Ausgestaltung wird das markierte graphische Objekt 7-1 in der Mitte der Anzeigefläche 3 am größten dargstellt. Die anderen graphischen Objekte 7-n werden kleiner dargestellt, wobei die Größe der Objekte 7-n mit zunehmenden Abstand von dem Objekt 7-1 abnimmt. In diesem Fall könnten die graphischen Objekte 7-1 auch verzerrt dargestellt werden, wie es sich bei einer Betrachtung durch ein Fisheye-Objektiv ergeben würde. Wenn in diesem Fall oder bei den vorstehend beschriebenen Ausführungsbeispielen die graphischen Objekte 7-n verschoben werden, wird die Größe der graphischen Objekte 7-n verändert, und zwar hängt die Größe eines graphischen Objekts 7-n dann von seinem Abstand von dem ortsfesten Markierbereich ab.

### Bezugszeichenliste

- 1: Bedienvorrichtung
- 2: Anzeigevorrichtung
- 3: Anzeigefläche
- 4: Steuervorrichtung
- 5: Bedienelement
- 6: Datenbus
- 7-1, 7-2, 7-n: graphische Objekte
- 8: Anzeigeelement
- 8-1: Linien
- 8-2: graphisches Haftelement
- 9: strahlenförmiges Anzeigeelement
- 10: Lichtrahmen

## Patentansprüche

1. Bedienverfahren, bei dem
- auf einer Anzeigefläche (3) eine Vielzahl von graphischen Objekten (7-n) bei verschiedenen Anzeigepositionen angezeigt wird,
- durch eine Betätigung eines Bedienelements (5), welches abgesetzt von der Anzeigefläche (3) angeordnet ist, die Anzeigepositionen der graphischen Objekte (7-n) gemeinsam verschoben werden, und
- zumindest ein graphisches Objekt (7-1) in Abhängigkeit von seiner Anzeigeposition relativ zu einem ortsfesten Markierbereich der Anzeigefläche (3) markiert dargestellt wird,
- wenn durch eine Betätigung des Bedienelements (5) die Anzeigepositionen der graphischen Objekte (7-n) gemeinsam verschoben werden, geprüft wird, ob ein Wechsel des markierten Objekts (7-1) initiiert werden soll, wobei die Prüfung in Abhängigkeit von den Anzeigepositionen der graphischen Objekte (7-n) relativ zu dem ortsfesten Markierbereich erfolgt,
**dadurch gekennzeichnet, dass**
- wenn die Prüfung ergeben hat, dass ein Wechsel des markierten Objekts (7-1) initiiert werden soll, ein strahlenförmiges Anzeigeelement (9) angezeigt wird, welches eine Anzeigeposition innerhalb des ortsfesten Markierbereichs mit dem zu markierenden Objekt (7-2) verbindet und die graphischen Objekte (7-n) dann automatisch gemeinsam so verschoben werden, dass das zu markierende Objekt (7-2) im Markierbereich der Anzeigefläche (3) dargestellt wird.

2. Bedienverfahren nach Anspruch 1,
**dadurch gekennzeichnet,**
**dass** bei der Prüfung, ob ein Wechsel des markierten Objekts (7-1) initiiert werden soll, geprüft wird, ob die Anzeigeposition eines anderen graphischen Objekts (7-2) näher an dem ortsfesten Markierbereich ist als die Anzeigeposition des gegenwärtig markierten graphischen Objekts (7-1).

3. Bedienverfahren nach Anspruch 1 oder 2,
**dadurch gekennzeichnet,**
**dass**, wenn ein markiertes Objekt (7-1) im Markierbereich angezeigt wird, zumindest ein graphisches Haftelement (8-2) angezeigt wird, welches das markierte Objekt (7-1) berührt.

4. Bedienverfahren nach Anspruch 3,
**dadurch gekennzeichnet,**
**dass** graphische Haftelemente (8-2) an den Enden von Linien (8-1) angeordnet sind, deren Verlängerungen sich in dem markierten graphischen Objekt (7-1) kreuzen.

5. Bedienverfahren nach einem der vorhergehenden Ansprüche,
**dadurch gekennzeichnet,**
**dass** eine Vignette eingeblendet wird, wenn ein Nutzer das Bedienelement (5) berührt, durch welche von dem markierten Objekt (7-1) entfernte Bereiche der Anzeigefläche (3) abgedunkelt dargestellt werden.

6. Bedienverfahren nach einem der vorhergehenden Ansprüche,
**dadurch gekennzeichnet,**
**dass** eine Korona um das markierte Objekt oder das zu markierende Objekt (7-2) angezeigt wird.

7. Bedienverfahren nach einem der Ansprüche 1 bis 5,
**dadurch gekennzeichnet,**
**dass** ein Lichtrahmen (10) um das markierte Objekt oder das zu markierende Objekt (7-n) angezeigt wird.

8. Bedienverfahren nach einem der vorhergehenden Ansprüche,
**dadurch gekennzeichnet,**
**dass** das markierte Objekt (7-1) am größten angezeigt wird und benachbarte graphische Objekte (7-n) kleiner angezeigt werden, wobei die Größe der benachbarten graphischen Objekte (7-n) mit zunehmendem Abstand von dem markierten Objekt (7-1) kleiner wird.

9. Bedienverfahren nach Anspruch 8,
**dadurch gekennzeichnet,**
**dass** sich die Größen der graphischen Objekte (7-n) verändern, wenn die graphischen Objekte (7-n) gemeinsam durch eine Betätigung des Bedienelements (5) verschoben werden, wobei die Größe eines graphischen Objekts (7-n) von seinem Abstand von dem ortsfesten Markierbereich abhängt.

10. Bedienvorrichtung (1) mit
- einer Anzeigefläche (3) auf der eine Vielzahl von graphischen Objekten (7-n) bei verschiedenen Anzeigepositionen anzeigbar sind,
- einem Bedienelement (5), das abgesetzt von der Anzeigefläche (3) angeordnet ist, und
- einer Steuervorrichtung (4), die mit der Anzeigefläche (3) und dem Bedienelement (5) gekoppelt ist, wobei durch eine Betätigung des Bedienelements (5) die Anzeigeposition der graphischen Objekte (7-n) gemeinsam verschiebbar sind, und wobei zumindest ein graphisches Objekt (7-1) in Abhängigkeit von seiner Anzeigeposition relativ zu einem ortsfesten Markierbereich der Anzeigefläche (3) markiert darstellbar ist, wobei
- wenn durch eine Betätigung des Bedienelements (5) die Anzeigepositionen der graphischen Objekte (7-n) gemeinsam verschoben werden, mittels der Steuervorrichtung (4) prüfbar ist, ob ein Wechsel des markierten Objekts (7-1) initiiert werden soll, wobei die Prüfung in Abhängigkeit von den Anzeigepositionen der graphischen Objekte (7-n) relativ zu dem ortsfesten Markierbereich erfolgt,
**dadurch gekennzeichnet, dass**
- wenn die Prüfung ergeben hat, dass ein Wechsel des markierten Objekts (7-1) initiiert werden soll, mittels der Steuervorrichtung (4) die Anzeigefläche (3) so ansteuerbar ist, dass ein strahlenförmiges Anzeigeelement (9) angezeigt wird, welches eine Anzeigeposition innerhalb des ortsfesten Markierbereichs mit dem zu markierenden Objekt (7-2) verbindet, und die graphischen Objekte (7-n) dann automatisch gemeinsam so verschoben werden, dass das zu markierende Objekt (7-2) im Markierbereich der Anzeigefläche (3) dargestellt wird.

## Claims

1. Operating method in which
- a multiplicity of graphical objects (7-n) are displayed on a display surface (3) at different display positions,
- the display positions of the graphical objects (7-n) are shifted together by actuating an operating element (5) which is arranged apart from the display surface (3), and
- at least one graphical object (7-1) is displayed marked relative to a fixed marking area of the display surface (3) as a function of its display position,
- when the display positions of the graphical objects (7-n) are shifted together by actuating the operating element (5), it is checked whether a change in the marked object (7-1) is to be initiated, the check being performed relative to the fixed marking area as a function of the display positions of the graphical objects (7-n),
**characterized in that**
- when the result of the check is that a change in the marked object (7-1) is to be initiated, a beam-shaped display element (9) is displayed which connects a display position within the fixed marking area with the object (7-2) to be marked, and the graphical objects (7-n) are then automatically shifted together so that the object (7-2) to be marked is displayed in the marking area of the display surface (3).

2. Operating method according to Claim 1, **characterized in that** during the check as to whether a change is to be initiated in the marked object (7-1), it is checked whether the display position of another graphical object (7-2) is closer to the fixed marking area than is the display position of the currently marked graphical object (7-1).

3. Operating method according to Claim 1 or 2, **characterized in that** when a marked object (7-1) is displayed in the marking area, at least one graphical adhesive element (8-2) is displayed which touches the marked object (7-1).

4. Operating method according to Claim 3, **characterized in that** graphical adhesive elements (8-2) are arranged at the ends of lines (8-1) whose extensions intersect at the marked graphical object (7-1) .

5. Operating method according to one of the preceding claims, **characterized in that** a vignette is inserted when a user touches the operating element (5) through which areas of the display surface (3) which are remote from the marked object (7-1) are displayed in dimmed fashion.

6. Operating method according to one of the preceding claims, **characterized in that** a corona is displayed around the marked object or the object (7-2) to be marked.

7. Operating method according to one of Claims 1 to 5, **characterized in that** a light frame (10) is displayed around the marked object or the object (7-n) to be marked.

8. Operating method according to one of the preceding claims, **characterized in that** the marked object (7-1) is displayed at its largest, and adjacent graphical objects (7-n) are displayed in a smaller fashion, the size of the adjacent graphical objects (7-n) becoming smaller with increasing distance from the marked object (7-1).

9. Operating method according to Claim 8, **characterized in that** the sizes of the graphical objects (7-n) change when the graphical objects (7-n) are shifted together by actuating the operating element (5), the size of a graphical object (7-n) being a function of its distance from the fixed marking area.

10. Operating device (1) having
- a display surface (3) on which it is possible to display a multiplicity of graphical objects (7-n) at different display positions,
- an operating element (5) which is arranged apart from the display surface (3), and
- a control device (4) which is coupled to the display surface (3) and the operating element (5), it being possible to shift the display position of the graphical objects (7-n) together by actuating the operating element (5), and it being possible for at least one graphical object (7-1) to be displayed marked relative to a fixed marking area of the display surface (3) as a function of its display position,
wherein
- when the display positions of the graphical objects (7-n) are shifted together by actuating the operating element (5), it is possible by means of the control device (4) to check whether a change in the marked object (7-1) is to be initiated, the check being performed relative to the fixed marking area as a function of the display positions of the graphical objects (7-n),
**characterized in that**
- when the result of the check is that a change in the marked object (7-1) is to be initiated, the display surface (3) can be controlled by means of the control device (4) so that a beam-shaped display element (9) is displayed which connects a display position within the fixed marking area with the object (7-2) to be marked, and the graphical objects (7-n) are then automatically shifted together so that the object (7-2) to be marked is displayed in the marking area of the display surface (3) .

## Revendications

1. Procédé de commande, dans lequel
- une pluralité d'objets graphiques (7-n) sont affichés à différentes positions d'affichage sur une surface d'affichage (3),
- les positions d'affichage des objets graphiques (7-n) sont décalées conjointement par un actionnement d'un élément de commande (5) qui est disposé de manière écartée de la surface d'affichage (3), et
- au moins un objet graphique (7-1) est représenté marqué en fonction de sa position d'affichage par rapport à une zone de marquage fixe de la surface d'affichage (3),
- lorsque les positions d'affichage des objets graphiques (7-n) sont décalées conjointement par un actionnement de l'élément de commande (5), il est vérifié si un changement de l'objet marqué (7-1) doit être déclenché, dans lequel la vérification est effectuée en fonction des positions d'affichage des objets graphiques (7-n) par rapport à une zone de marquage fixe,
**caractérisé en ce que**
- lorsqu'il résulte de la vérification qu'un changement de l'objet marqué (7-1) doit être déclenché, il est affiché un élément d'affichage en forme de trait (9) qui relie une position d'affichage à l'intérieur de la zone de marquage fixe à l'objet à marquer (7-2) et les objets graphiques (7-n) sont ensuite automatiquement décalés conjointement de manière à ce que l'objet à marquer (7-2) soit représenté dans la zone de marquage de la surface d'affichage (3).

2. Procédé de commande selon la revendication 1, **caractérisé en ce que**, lors de la vérification destinée à déterminer si un changement de l'objet marqué (7-1) doit être déclenché, il est vérifié si la position d'affichage de l'un d'autres objets graphiques (7-2) est plus proche de la zone de marquage fixe que la position d'affichage de l'objet graphique actuellement marqué (7-1).

3. Procédé de commande selon la revendication 1 ou 2, **caractérisé en ce que**, lorsqu'un objet marqué (7-1) est affiché dans la zone de marquage, il est affiché au moins un élément graphique adhésif (8-2) qui touche l'objet marqué (7-1).

4. Procédé de commande selon la revendication 3, **caractérisé en ce que** les éléments graphiques adhésifs (8-2) sont disposés aux extrémités de lignes (8-1) dont les prolongements se croisent dans l'objet graphique marqué (7-1).

5. Procédé de commande selon l'une des revendications précédentes, **caractérisé en ce qu'**une vignette apparaît lorsqu'un utilisateur touche l'élément de commande (5), au moyen de laquelle des zones de la surface d'affichage (3) qui sont éloignées de l'objet marqué (7-1) sont représentées de manière assombrie.

6. Procédé de commande selon l'une des revendications précédentes,
**caractérisé en ce qu'**une couronne est affichée autour de l'objet marqué ou de l'objet à marquer (7-2).

7. Procédé de commande selon l'une des revendications 1 à 5,
**caractérisé en ce qu'**un cadre lumineux (10) est affiché autour de l'objet marqué ou de l'objet à marquer (7-n).

8. Procédé de commande selon l'une des revendications précédentes, **caractérisé en ce que** l'objet marqué (7-1) est affiché de la manière la plus agrandie et **en ce que** des objets graphiques voisins (7-n) sont affichés de manière réduite, dans lequel la taille des objets graphiques voisins (7-n) diminue lorsque la distance à l'objet marqué (7-1) augmente.

9. Procédé de commande selon la revendication 8, **caractérisé en ce que** les tailles des objets graphiques (7-n) varient lorsque les objets graphiques (7-n) sont décalés conjointement par un actionnement de l'élément de commande (5), dans lequel la taille d'un objet graphique (7-n) dépend de sa distance à la zone de marquage fixe.

10. Dispositif de commande (1) comportant
- une surface d'affichage (3) sur laquelle peuvent être affichés une pluralité d'objets graphiques (7-n) à différentes positions d'affichage,
- un élément de commande (5) qui est disposé de manière écartée de la surface d'affichage (3), et
- un dispositif de commande (4) qui est couplé à la surface d'affichage (3) et à l'élément de commande (5), dans lequel les positions d'affichage des objets graphiques (7-n) peuvent être décalées conjointement par un actionnement de l'élément de commande (5), et dans lequel au moins un objet graphique (7-1) peut être représenté marqué en fonction de sa position d'affichage par rapport à une zone de marquage fixe de la surface d'affichage (3),
dans lequel
- lorsque les positions d'affichage des objets graphiques (7-n) sont décalées conjointement par un actionnement de l'élément de commande (5), le dispositif de commande (4) permet de vérifier si un changement de l'objet marqué (7-1) doit être déclenché, dans lequel la vérification est effectuée en fonction des positions d'affichage des objets graphiques (7-n) par rapport à la zone de marquage fixe,
**caractérisé en ce que**
- lorsqu'il résulte de la vérification qu'un changement de l'objet marqué (7-1) doit être déclenché, le dispositif de commande (4) permet de commander la surface d'affichage (3) de manière à ce qu'il soit affiché un élément d'affichage en forme de trait (9) qui relie une position d'affichage à l'intérieur de la zone d'affichage fixe à l'objet à marquer (7-2), et les objets graphiques (7-n) sont ensuite automatiquement décalés conjointement de manière à ce que l'objet à marquer (7-2) soit représenté dans la zone de marquage de la surface d'affichage (3).
